# EUROPÄISCHE PATENTSCHRIFT

(11) **EP 1 394 391 B1**
(45) Veröffentlichungstag und Bekanntmachung des Hinweises auf die Patenterteilung: **13.04.2011**
(21) Anmeldenummer: 03012339.2
(22) Anmeldetag: 30.05.2003
(51) Int. Cl.: F02D 9/16

(54) **Klappenelement und Klappenanordnung**
Valve element and valve assembly
Elément de soupape et ensemble de soupape

(30) Priorität: 31.08.2002 DE 10240316
(43) Veröffentlichungstag der Anmeldung: 03.03.2004
(73) Patentinhaber: Pierburg GmbH, 41460 Neuss (DE)
(72) Erfinder: Simons, Norbert, 40221 Düsseldorf (DE)
(74) Vertreter: Patentanwälte ter Smitten

(56) Entgegenhaltungen:
- DE-A1- 3 833 846
- DE-A1- 19 614 474
- US-A- 2 529 572

## Beschreibung

Die Erfindung betrifft ein Klappenelement für eine Verbrennungskraftmaschine mit mindestens einer Klappe, die auf einer Welle angeordnet ist, wobei die Welle zumindest eine Lagerstelle aufweist, und eine Klappenanordnung mit einem solchen Klappenelement und einem Gehäuse, insbesondere einem Ansaugkanalsystem.

Klappenelemente und Klappenanordnungen, insbesondere in den Saugkanälen eines Verbrennungsmotors, sind allgemein bekannt und können beispielsweise als Schaltklappe zur Längenverstellung eines Saugrohres oder als Drallklappe dienen. In der DE 196 14 474 A1 wird ein Luftansaugkanalsystem für Brennkraftmaschinen beschrieben, bei dem das Luftansaugkanalsystem zumindest zweiteilig ausgeführt ist, so daß die Welle mit den Schaltklappen und der Wellenlagerung in eine Hälfte des Luftansaugkanalsystems eingesteckt wird und anschließend die andere Hälfte des Luftansaugkanalsystems auf die erste montiert wird, wodurch eine feste Lagerung der Schaltklappenwelle im Luftansaugkanalsystem entsteht. In der DE 38 33 846 A1 wird eine Drallklappenanordnung beschrieben, bei der die Schwenkachse der Drallklappen in Vertiefungen des Saugrohrkanals eingesetzt wird, die zusammen mit der stoßseitigen Fläche des Motorblocks oder des Saugrohres nach Montage dann ein geschlossenes Lager für die Schwenkachse bilden. Eine weitere Möglichkeit ist, die Welle in entsprechende Aussparungen bzw. Lagerstellen im Saugrohr zu stecken und anschließend die Klappen durch die Kanäle des Saugrohres an der Welle zu verschrauben oder zu verschweißen.

Während bei der Methode des zweiteiligen lagerbildenden Gehäuses Schwierigkeiten bei der Einhaltung der notwendigen Toleranzen zwischen den beiden Fertigungsteilen besteht, tritt bei der Lösung mit vormontierten Lagerstellen an der Welle, die in ein Gehäuseteil gesetzt werden, das Problem des zusätzlichen Montageaufwandes ein, welches auch bei späterer Befestigung der Klappen an der Welle aufgrund schlechter Zugänglichkeit vorhanden ist.

Aufgabe der Erfindung ist es somit, ein Klappenelement zu schaffen, welches ohne großen Montageaufwand in ein die Lagerung aufweisendes Gehäuse eingebracht werden kann und gleichzeitig den Aufwand bei der Bearbeitung des Gehäuses möglichst gering zu halten optimalerweise so, daß möglichst einfache Bearbeitungsmaschinen genutzt werden können, wodurch Kosten eingespart werden.

Diese Aufgaben werden dadurch gelöst, daß die Welle mit ihrer mindestens einen Lagerstelle unterschiedliche Durchmesser aufweist, wobei der oder die an einer Seite der Klappe gelegenen Durchmesser D der Welle größer sind als die maximale Ausdehnung der Klappe in radialer Richtung zur Welle. Dadurch wird es möglich, die Klappe in axialer Richtung mit der Welle in ein einteiliges Gehäuse beispielsweise ein Saugrohr einzuschieben.

In einer bevorzugten Ausführungsform wachsen die Durchmesser der Welle stufenförmig von einem ersten Endabschnitt der Klappe zu einem zweiten Endabschnitt des Klappenelementes an. Mit dem jeweils geringeren Durchmesser, also der ersten Seite des Klappenelementes, voran wird das Klappenelement dann in das Gehäuse eingeschoben und erhält aufgrund der stufenförmigen Form eine radiale Lagerung.

In einer Weiterführung der Erfindung sind Welle und Klappe einstückig ausgebildet, so daß ein zusätzlicher Montageaufwand zum Verbinden von Klappe und Welle entfällt.

Bevorzugt wird eine Ausführungsform, bei der im Bereich der Lagerstellen der Welle Dichtringe angeordnet sind, die einen inneren Bereich des Gehäuses gegen einen äußeren Bereich des Gehäuses abdichten, wodurch jegliches zusätzliches Einbringen von Dichtungen ins Gehäuse nicht mehr notwendig ist und der Montageaufwand auf diese Weise erneut verringert wird.

Insbesondere bei Klappen in Kunststoffausführung wird es bevorzugt, die Lippendichtringe direkt anzuspritzen. Dadurch verringert sich das Risiko eines Verrutschens der Dichtung bei der Montage, da eine feste Verbindung von Dichtring und Welle existiert.

Entsprechend der Ausführung des Klappenelementes sollte das Gehäuse Bohrungen zur Aufnahme des Klappenelementes aufweisen, deren Durchmesser entsprechend des Wellendurchmessers stufenförmig in eine Richtung anwachsen, so daß ein entsprechender Lagerstellensitz für die Welle geschaffen wird und das Klappenelement von der Seite des Bohrungsdurchmessers des Gehäuses in Richtung des kleineren einschiebbar ist. Des weiteren wird es auf diese Art und Weise möglich, die mechanische Bearbeitung des Gehäuses zur Lagerung der Klappenvorrichtung nur von einer Seite des Gehäuses in Richtung der Wellendrehachse erfolgen zu lassen, wodurch relativ einfach aufgebaute Bearbeitungsmaschinen verwendet werden können und der Bearbeitungsaufwand deutlich sinkt. Des weiteren werden Montagezeit und -kosten eingespart.

In einer bevorzugten Ausführungsform sollten die Bohrungen des Gehäuses Anschlagkanten für das Klappenelement aufweisen, so daß auch eine axiale Lagerung des Klappenelementes mit der Welle im Gehäuse sichergestellt ist.

Entsprechend ist es möglich, mehrere Klappen auf einer Welle anzuordnen und die stufenförmige Erweiterung der Welle und des Gehäuses so auszuführen, daß ein Einschieben des gesamten Klappenelementes in das Gehäuse möglich ist. Dadurch wird eine Lagerung jeder einzelnen Klappe verwirklicht, wobei dennoch ein einziger Montageschritt genügt, um alle benötigten Klappen sicher zu montieren, zu lagern und abzudichten.

Durch die beschriebenen Ausführungsformen können somit Herstellungs- und Montagekosten minimiert werden, wobei gleichzeitig die Funktionsweise des Klappenelementes bzw. der Klappenanordnung durch eine sauber gelagerte und abgedichtete Bauweise sichergestellt ist. Ein Ausführungsbeispiel der vorliegenden Erfindung ist in den Zeichnungen dargestellt und wird nachfolgend beschrieben.

Figur 1 zeigt ein erfindungsgemäßes Klappenelement, in diesem Fall eine Drallklappe mit zwei Lagerstellen in perspektivischer Darstellung.

Figur 2 zeigt in Seitenansicht ein Gehäuse für die erfindungsgemäße Klappenanordnung aus Figur 1 in schematischer Darstellung.

Figur 3 zeigt in Seitenansicht die erfindungsgemäße Klappenanordnung mit Klappenelement aus Figur 1 im montierten Zustand in schematischer Darstellung.

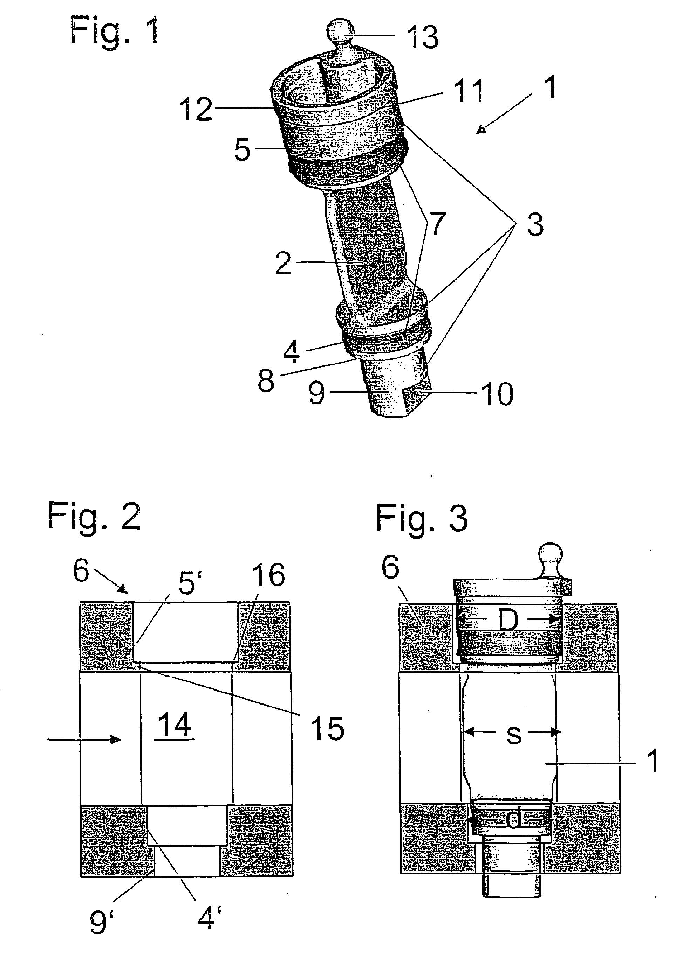

Das in Figur 1 dargestellte Klappenelement 1 besteht aus einer Drallklappe 2 und einer Welle 3. Diese Welle 3 weist an der ersten Seite der Drallklappe 2 eine erste Lagerstelle 4 und an ihrem anderen Ende eine zweite Lagerstelle 5 auf, über die das Klappenelement 1 in einem Gehäuse 6 gelagert wird. Im Bereich der beiden Lagerstellen 4 und 5 ist je ein Lippendichtring 7 aufgeschoben oder angespritzt, um das Innere des Gehäuses 6 gegen das Äußere abzudichten. Es ist zu erkennen, daß der Durchmesser d der ersten Lagerstelle 4 geringer ist als der Durchmesser D der zweiten Lagerstelle 5. Des weiteren ist die maximale Klappenausdehnung S der Drallklappe geringer als der Durchmesser D der zweiten Lagerstelle 5. Die Drallklappe 2 weist ein strömungsgünstiges Klappenprofil auf, welches sich in seinen Endbereichen leicht verjüngt. Am von der Klappe 2 wegweisenden Ende der ersten Lagerstelle 4 ist ein weiterer Absatz 8 vorhanden, so daß sich die Welle in dieser Richtung stufenförmig mit kleiner werdendem Durchmesser verlängert. Die Welle endet hier in einem ersten Endabschnitt 9, bei dem an zwei radial gegenüberliegenden Enden der Welle zwei Teilkreisabschnitte der sonst kreisförmigen Welle weggenommen wurden, so daß sich zwei in Achsrichtung parallele Endflächen ergeben. Dieser Endabschnitt 9 mit den zwei parallelen Flächen 10 ragt im eingebauten Zustand über das Ende des Gehäuses 6 hinaus, so daß auch über diesen Abschnitt 9 des Klappenelementes 1 die Drallklappe 2 angetrieben werden kann. Die zweite Lagerstelle 5 weist in von der Klappe wegweisender Richtung einen sich allerdings erweiternden Absatz 11 auf, der die Welle 3 in dieser Richtung verlängert. Ein dadurch entstehender zweiter Endabschnitt 12 des Klappenelementes 1 ragt im eingebauten Zustand des Klappenelementes im Gehäuse 6 ebenfalls über den Rand des Gehäuses 6. Am Ende dieses zweiten Endabschnitts ist ein Kugelkopf 13 angebracht, der zur Aufnahme eines nicht dargestellten Koppelgestänges dient, welches durch eine nicht dargestellte Antriebseinheit bewegt wird.

In Figur 2 ist das Gehäuse 6 zu erkennen, welches zur Aufnahme des in Figur 1 dargestellten Klappenelementes dient. Es besteht aus einem Kanal 14, dessen Fluiddurchsatz durch das Klappenelement 1 gesteuert wird. Senkrecht zum Kanal 14 ist eine Bohrung vorhanden, welche sich von einem ersten Endabschnitt 9' über einen ersten Lagersitz 4' und jenseits des Kanals 14 über einen Anschlagabschnitt 15 bis zu einem zweiten Lagersitz 5' erweitert. Es ist zu erkennen, daß es durch diesen wachsenden Durchmesser möglich wird, diese Geometrie des Gehäuses 6 durch Bearbeitung von nur einer Seite herzustellen.

In Figur 3 sehen wir noch einmal das aus Figur 2 bekannte Gehäuse 6, in diesem Fall mit eingebautem Klappenelement 1, wie es in Figur 1 dargestellt wurde. Es ist zu erkennen, daß der Anschlagabschnitt 15 des Gehäuses 6 eine Anschlagkante 16 aufweist, gegen die das Klappenelement 1 geschoben wird, so daß es eine axiale Lagerung erhält.

Desweiteren ist es möglich mehrere Klappen 2 auf einer Welle 3 anzuordnen. Um weiterhin das gesamte Klappenelement 1 von einer Seite in das Gehäuse 6 einschieben zu können und des weiteren das Gehäuse 6 auch nur in dieser Einschubund Montagerichtung bearbeitet zu müssen, ist es notwendig, daß bei gleichbleibender Klappengeometrie beide Durchmesser der beiden Lagerstellen der oberen Klappe größer sein müssen als die maximale Klappenausdehnung S, da ansonsten die untere Klappe nicht mehr in das Gehäuse eingeschoben werden könnte. In diesem Fall existieren natürlich die beiden Endabschnitte 9 und 12 nicht an jeder einzelnen Klappe, sondern nur einmal für jedes Klappenelement 1 bestehend aus mehreren Klappen 2. Ansonsten dient jeweils die erste Lagerstelle 4 einer Klappe 2 als zweite Lagerstelle 5 der folgenden Klappe 2.

Mit dieser erfindungsgemäßen Ausführung liegt eine Konstruktion vor, die es ermöglicht, eine Klappenanordnung zu schaffen, bei der die Montage und Bearbeitung nur in einer, in diesem Fall axialen Richtung erfolgen muß. Dadurch wird der Montageaufwand erheblich geringer und Herstellkosten werden eingespart.

Veränderungen bezüglich der Ausführung und der Funktion des Klappenelementes, insbesondere des Profils, aber auch bezüglich der jeweiligen End- bzw. Lagerabschnitte der Klappe, z.B. Wegfall des Abschnittes 9, die insbesondere bei verändertem Antrieb natürlich andere Kopplungsvorrichtungen als den hier erwähnten Kugelkopf verwenden können, aber auch eine andere Ausführung des Gehäuses z.B. mit einem Sackloch statt des ersten Endabschnitts 9' sind auch Teil dieser Erfindung und somit im Schutzbereich der Erfindung eingeschlossen.

## Patentansprüche

1. Klappenelement für eine Verbrennungskraftmaschine mit mindestens einer Klappe, die auf einer Welle angeordnet ist, wobei die Welle zumindest eine Lagerstelle aufweist, wobei die Welle (3) mit ihrer mindestens einen Lagerstelle (4,5) unterschiedliche Durchmesser (d,D) aufweist, **dadurch gekennzeichnet, dass**, der oder die an einer Seite der Klappe (2) gelegenen Durchmesser D der Welle (3) größer sind als die maximale Ausdehnung S der Klappe (2) in radialer Richtung zur Welle (3).

2. Klappenelement nach Anspruch 1, **dadurch gekennzeichnet, daß** die Durchmesser der Welle (3) stufenförmig von einem ersten Endabschnitt (9) des Klappenelementes (1) zu einem zweiten Endabschnitt (12) des Klappenelementes (1) anwachsen.

3. Klappenelement nach Anspruch 1 oder 2, **dadurch gekennzeichnet, daß** die Welle (3) und die Klappe (2) einstückig ausgebildet sind.

4. Klappenelement nach einem der vorhergehenden Ansprüche, **dadurch gekennzeichnet, daß** im Bereich der Lagerstellen (4, 5) der Welle Dichtringe (7), insbesondere Lippendichtringe, angeordnet sind.

5. Klappenelement nach einem der vorhergehenden Ansprüche, **dadurch gekennzeichnet, daß** die Dichtringe (7) an die Welle (3) angespritzt sind.

6. Klappenanordnung mit einem Klappenelement nach einem der vorhergehenden Ansprüche und einem Gehäuse, insbesondere einem Ansaugkanalsystem, **dadurch gekennzeichnet, daß** das Gehäuse (6) zur Aufnahme des Klappenelements (1) Bohrungen aufweist, deren Durchmesser entsprechend des Wellendurchmessers stufenförmig in eine Richtung anwachsen.

7. Klappenanordnung nach Anspruch 5 oder 6, **dadurch gekennzeichnet, daß** die Bohrungen des Gehäuses (6) Anschlagkanten (16) für das Klappenelement (1) aufweisen.

8. Klappenanordnung nach einem der Ansprüche 5 bis 7, **dadurch gekennzeichnet, daß** mehrere Klappen (2) auf einer Welle (3) angeordnet sind und die stufenförmige Erweiterung der Welle und des Gehäuses sich über die gesamte Länge des Klappenelementes (1) erstreckt, so daß das gesamte Klappenelement (1) von einer Seite in das Gehäuse (6) einschiebbar ist.

## Claims

1. Valve element for an internal combustion engine, comprising at least one valve arranged on a shaft, said shaft having at least one bearing position, the shaft (3), with its at least one bearing position (4, 5), having different diameters (d, D), **characterized in that** the diameter or the diameters D of the shaft (3), situated on one side of the valve (2), is/are larger than the maximum dimension S of the valve (2) in a direction radial to the shaft (2).

2. Valve element of claim 1, **characterized in that** the diameters of the shaft (3) increase in a stepped manner from a first end section (9) of the valve element (1) to a second end section (12) of the valve element (1).

3. Valve element of claim 1 or 2, **characterized in that** the shaft (3) and the valve (2) are formed integrally.

4. Valve element of one of the preceding claims, **characterized in that** sealing rings (7), in particular lip sealing rings, are provided in the region of the bearing positions (4, 5) of the shaft.

5. Valve element of one of the preceding claims, **characterized in that** said sealing rings (7) are overmoulded on the shaft (3).

6. Valve arrangement having a valve element of one of the preceding claims and a housing, in particular an intake duct system, **characterized in that** the housing (6) has bores (1) to receive the valve element (1), the diameter of the bores increasing in one direction in a stepped manner corresponding to the shaft diameter.

7. Valve arrangement of claim 5 or 6, **characterized in that** the bores of the housing (6) have stop edges (16) for the valve element (1).

8. Valve arrangement of one of claims 5 to 7, **characterized in that** a plurality of valves (2) is arranged on a shaft (3) and the step-shaped enlargement of the shaft and the housing extend over the entire length of the valve element (1) so that the entire valve element (1) can be inserted into the housing (6) from one side.

## Revendications

1. Élément de soupape d'un moteur à combustion interne comprenant au moins une soupape située sur un arbre, ledit arbre comprenant au moins un support, ledit arbre (3), avec son au moins un support (4, 5), comprenant différents diamètres (d, D), **caractérisé en ce que** le ou les diamètres D de l'arbre (3), situés sur un côté de ladite soupape (2), sont supérieurs à la dimension maximale S de ladite soupape (2) dans la direction radiale par rapport à l'arbre (3).

2. Élément de soupape selon la revendication 1, **caractérisé en ce que** les diamètres de l'arbre (3) augmentent en gradins d'une première section d'extrémité (9) dudit élément de soupape (1) à une deuxième section d'extrémité (12) dudit élément de soupape (1).

3. Élément de soupape selon les revendications 1 ou 2, **caractérisé en ce que** ledit arbre (3) et la soupape (2) sont formés d'un seul tenant.

4. Élément de soupape selon l'une quelconque des revendications précédentes, **caractérisé en ce que** des bagues d'étanchéité (7), notamment des bagues d'étanchéité à lèvres, sont prévues dans la région des supports (4, 5) dudit arbre.

5. Élément de soupape selon l'une quelconque des revendications précédentes, **caractérisé en ce que** les bagues d'étanchéité (7) sont surmoulées sur l'arbre (3).

6. Ensemble de soupape avec un élément de soupape selon l'une quelconque des revendications précédentes et un boitier, notamment un système de conduits d'admission, **caractérisé en ce que** ledit boitier (6) comprend des
perçages pour recevoir ledit élément de soupape (1), les diamètres des perçages augmentant en gradins dans une direction, correspondant au diamètre de l'arbre.

7. Ensemble de soupape selon les revendications 5 ou 6, **caractérisé en ce que** les perçages du boitier (6) présentent des arêtes de butée (16) pour ledit élément de soupape (1).

8. Ensemble de soupape selon les revendications 5 à 7, **caractérisé en ce que** plusieurs soupapes (2) sont prévues sur un arbre (3) et l'élargissement en gradins de l'arbre et dudit boitier s'étend sur toute la longueur dudit élément de soupape (1), de sorte que tout ledit élément de soupape (1) peut être inséré dans ledit boitier (6) par un côté.
